Europäisches Patentamt

European Patent Office

Office européen des brevets

(11) Publication number: **0 314 636**
**A2**

# EUROPEAN PATENT APPLICATION

(21) Application number: **88830433.4**

(22) Date of filing: **25.10.88**

(51) Int. Cl.⁴: **F 16 H 3/08**
**F 16 H 5/14**

(30) Priority: **26.10.87 IT 6789587**

(43) Date of publication of application:
**03.05.89 Bulletin 89/18**

(84) Designated Contracting States:
**AT CH DE ES FR GB LI**

(71) Applicant: **SAME S.p.A.**
**Viale F. Cassani, 14**
**I-24047 Treviglio Bergamo (IT)**

(72) Inventor: **Massaccesi, Gianni**
**c/o SAME S.p.A Viale F. Cassani, 14**
**I-24047 Treviglio Bergamo (IT)**

(74) Representative: **Buzzi, Franco et al**
**c/o Jacobacci-Casetta & Perani S.p.A. Via Alfieri, 17**
**I-10121 Torino (IT)**

(54) A power-shift gearbox unit for tractors.

(57) A power-shift gearbox unit (1) for tractors comprises two hydraulically-operated friction power-shift clutches (11, 12) associated with the gears of two different speed ratios (8, 9) and including a single drum (13) formed with two opposing thrust chambers (23, 24) for operating two pistons (21, 22) for clamping the friction discs (15, 17; 16, 18) of the two clutches. The hub (14) of the drum (13) is provided with a resilient device (25) for compensating for the axial thrusts applied to the two pistons (21, 22) by the pressure produced in the respective thrust chambers (23, 24) by centrifugal action.

FIG. 1

EP 0 314 636 A2

## Description

### A power-shift gearbox unit for tractors

The present invention relates in general to power-shift gearboxes for tractors.

The invention is more particularly concerned with a two-speed-ratio unit which forms part of a power-shift gearbox for tractors, of the type comprising an input shaft carrying first and second driving gears, an output shaft on which first and second driven gears meshed with the driving gears are rotatably mounted, and two friction clutches including a single drum having a hub coupled for rotation with the driven shaft between the two driven gears, two sets of driving and driven friction discs situated on opposite sides of the drum for making the first or second driven gear fast for rotation therewith by means of first and second pistons which are slidably axially relative to the drum and define therewith respective pressure chambers connected to a hydraulic power-shift operating system.

In currently-known gearbox units of this type there is a problem related to the fact that, during operation an additional pressure is generated in the pressure chambers of the pistons of the two friction clutches, which is due to the centrifugal force and is therefore dependent on the rate of rotation of the output shaft, and this is added to the supply pressure and therefore affects the engagement and disengagement curves of the two friction clutches.

The object of the present invention is to avoid the above problem, and this object is achieved by virtue of the fact that the hub of the drum common to the two friction clutches is provided with a resilient device for compensating for the axial thrusts applied to the pistons by the pressure produced in the respective thrust chambers by centrifugal action.

According to a preferred embodiment of the invention, this compensating device comprises: a plurality of axial studs mounted for sliding through the hub of the drum, the studs having respective substantially mushroom-shaped ends projecting from opposite sides of the hub, a pair of retaining rings coaxial with the output shaft and arranged in frontal peripheral bearing contact with the first and second pistons, each retaining ring having a plurality of radial notches which open onto the inner edge of the ring and are extended at one side by a lateral notch in which the corresponding mushroom-shaped end of a respective axial stud is engaged, two rings of axial thrust springs reacting between two pairs of spaced-apart bearing rings coaxial with the output shaft adjacent the retaining rings, the bearing ring adjacent the corresponding retaining ring of each pair reacting against the corresponding mushroom-shaped ends of the axial studs and carrying a plurality of axial pins which pass slidably through the radial notches in the corresponding retaining ring and react frontally against the hub.

By virtue of this arrangement, the two rings of springs effectively compensate for the axial thrusts generated on the pistons of the friction clutches by centrifugal action and also have an advantageous centring effect on the two pistons when the two clutches are in the disengaged condition, so as to ensure the necessary clearance between the driving and driven friction discs.

The invention will now be described in detail with reference to the appended drawings, provided purely by way of non-limiting example, in which:

Figure 1 is a schematic axial section of a gearbox unit according to the invention.

Figure 2 shows a detail of Figure 1 on an enlarged scale.

Figure 3 is an exploded perspective view of Figure 2, and

Figure 4 is a front elevational view of the detail indicated by the arrow IV of Figure 3.

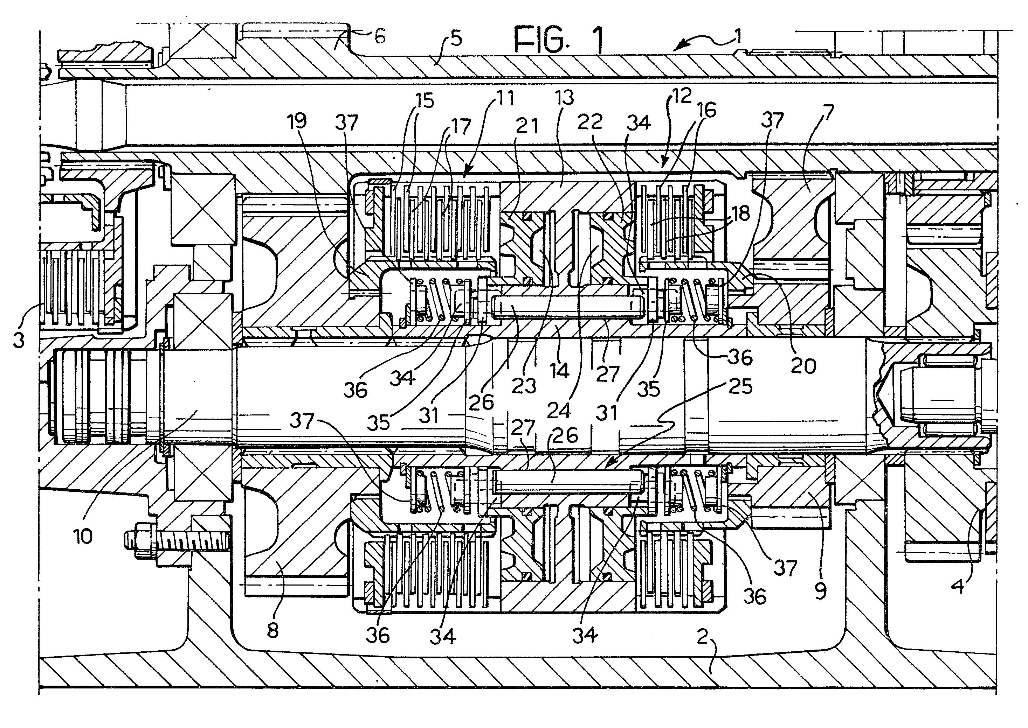

With reference initially to Figure 1, a two-speed-ratio unit constituting part of a power-shift gearbox for tractors is generally indicated 1. The unit 1 is inserted in a casing 2 downstream of a central friction clutch, part of which is indicated with reference 3, and upstream of a further group, part of which is indicated with 4, including a device for the engagement of a further gear ratio and possibly a synchronized reverser. These components are not shown for simplicity of illustration and because their description is irrelevant for the purposes of the present invention.

The unit 1 includes a hollow input shaft 5 carrying first and second driving gears 6, 7 meshed respectively with first and second driven gears 8, 9 with different transmission ratios. The driven gears 8 and 9 are mounted for rotation on an output shaft 10 and can be coupled selectively for rotation with the latter by means of two hydraulically-operated, friction power-shift clutches 11, 12.

The two friction clutches 11 and 12 have a common element constituted by a drum 13 provided with a tubular hub 14 fast for rotation with the output shaft 10 and interposed between the two driven gears 8 and 9.

The drum 13 carries two opposing sets of driving friction discs 15, 16 between which are interposed driven friction discs 17 and 18 coupled respectively to an annular element 19 fixed for rotation with the driven gear 8 and an annular element 20 fixed for rotation with the driven gear 9. As can clearly be seen in Figure 1, the number of friction discs 15 and 17 of the clutch 11 is greater than the number of friction discs 16 and 18 of the clutch 12, whilst the clearance between these discs in the disengaged condition of the clutches 11 and 12, shown in Figure 1, is equal and constant.

Two annular pistons, indicated 21 and 22, by means of which the respective friction discs 15, 17 and 16, 18 are brought together, that is, the respective clutches 11 and 12 are engaged, are mounted slidably on opposite sides within the drum 13, coaxially therewith.

A respective thrust chamber 23, 24 is associated with each of the pistons 21, 22 and is connected to a hydraulic power-shift operating device of generally known type. Since, as stated above, the number of discs 15 and 17 of the clutch 11 is greater than the number of discs 16 and 18 of the clutch 12, whilst the clearance between these discs is equal in the disengaged condition of the two clutches, the distances travelled by the two pistons 21 and 22 upon engagement of the clutches are proportionally different.

When the unit 1 is rotating, an additional pressure is generated in the thrust chambers 23 and 24, which is due to the centrifugal force and is therefore dependent on the rate of rotation of the output shaft 10, and this is added to the supply pressure of these chambers and could therefore affect the engagement and disengagement curves of the two clutches 11 and 12.

In order to avoid this effect, according to the invention, the axial thrusts generated on the pistons 21 and 22 as a result of the centrifugal pressure are compensated for by means of a resilient compensator device, generally indicated 25, associated with the hub 14 of the drum 13.

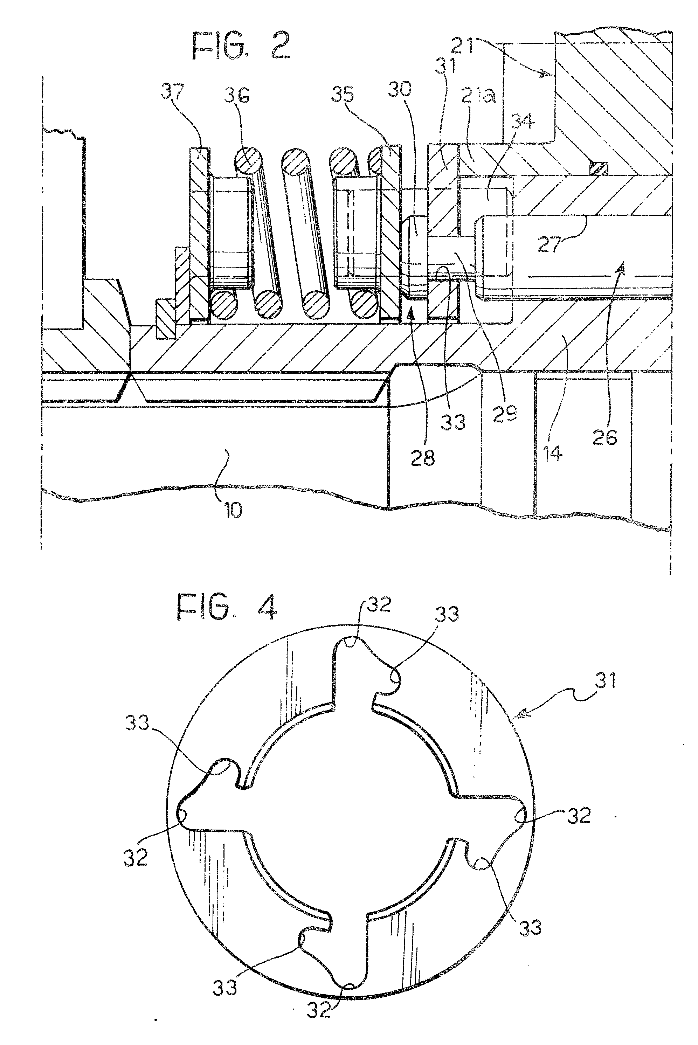

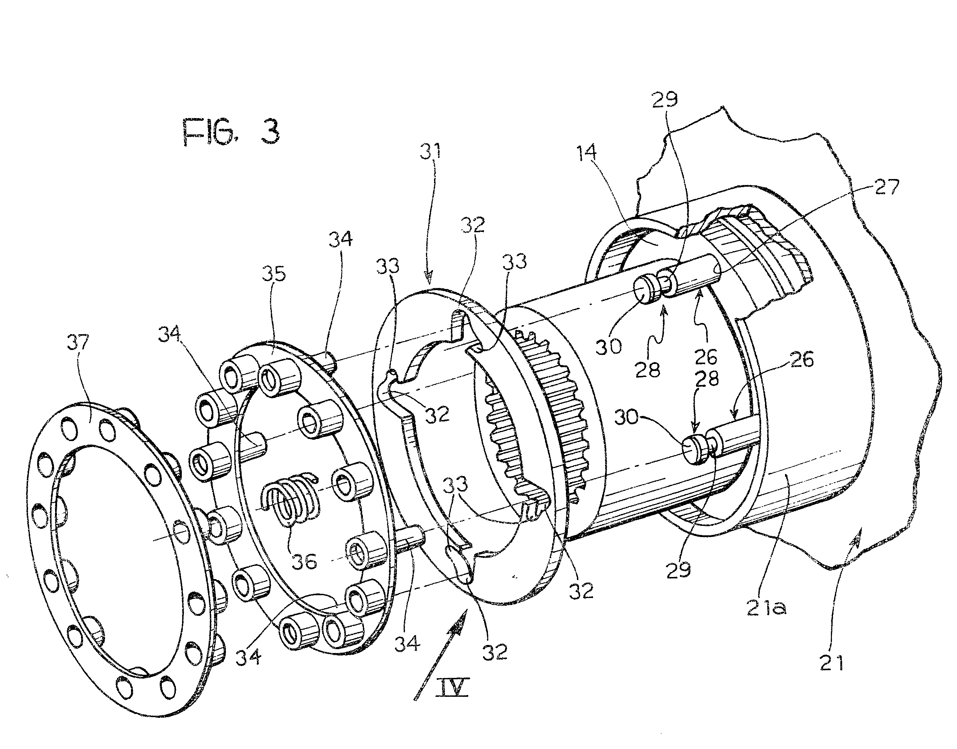

With reference in greater detail to Figures 2 and 3, this resilient compensator device 25 comprises a series of axial studs 26 (four in the embodiment illustrated) which are equiangularly spaced about the axis of the output shaft 10 and mounted for free sliding through corresponding axial through-holes 27 in the hub 14. Each stud 26 has mushroom-shaped ends 28 formed by reduced-diameter stems 29 terminating in enlarged heads 30.

The mushroom-shaped ends 28 of the studs 26 are engaged through a pair of retaining rings 31 coaxial with the hub 14 and arranged peripherally in frontal bearing contact against respective annular appendages 21a, 22a of the two pistons 21 and 22.

As can better be seen in Figure 4, each retaining ring 31 has a series of radial notches 32 which corresponds to the number of studs 26, each notch opening onto the inner edge of the ring and being extended at one side by a lateral notch 33. The mushroom-shaped ends 28 of the studs 26 are inserted in these notches 32 with their stems 29 engaged in the lateral notches 33 and their heads 30 reacting against the faces of the retaining rings 31 opposite the pistons 21 and 22.

The notches 32 in the two retaining rings 31 are traversed by a number of corresponding axial pins 34 obviously equal to the number of studs 26 and carried by two bearing rings 35 which surround the hub 14 coaxially adjacent the two retaining rings 31. The pins 34 pass axially through the respective retaining rings 31 in a slidable manner and bear frontally against the opposite sides of the hub 14. Moreover, the bearing rings 35 react frontally against the corresponding heads 30 of the axial studs 26.

Two rings of helical compression springs, indicated 36, react at one end against the two rings 35 and at the other end against two further bearing rings 37 coaxial with the hub 14.

In operation, the drive from the input shaft 5 is transmitted to the output shaft 10 through one or other of the pairs of gears 6, 8 and 7, 9 by means of the engagement and disengagement of the two friction clutches 11 and 12, in the manner characteristic of a power-shift system.

The two rings of springs 36 enable the two pistons 21 and 22 to be positioned univocally in the disengaged condition of both the clutches 11, 12, ensuring the necessary clearance between the friction discs 15, 17 and 16, 18.

When one of the two clutches 11, 12 is engaged, the respective piston 21 or 22 moves in the direction which corresponds to the clamping of the respective friction discs 15, 17 or 16, 18. The movement of the piston 21 or 22 is translated into a corresponding movement of the corresponding retaining ring 31 in the same direction and an equal movement of the studs 26 in that direction. The axial thrust imparted by the latter to the corresponding bearing ring 35 is translated into compression of the ring of springs 36 situated on the same side as the clutch 11 or 12 which is engaged, whilst the simultaneous entrainment of the other retaining ring 31 by the studs 26 causes the retraction of the respective piston 22 or 21 of the clutch 12 or 11 which is not engaged. The springs 36 situated on the same side as the clutch which is not engaged are not involved in these movements, since the corresponding bearing ring 35 remains in a stationary position, bearing against the hub 14 by means of the respective pins 34.

The axial thrusts on the pistons 21 and 22 due to the increase in pressure in the chambers 23 and 24 due to centrifugal action are thus compensated for in operation.

## Claims

1. A power-shift gearbox unit for tractors, comprising an input shaft carrying first and second driving gears, an output shaft on which first and second driven gears meshed with the driving gears are rotatably mounted, and two friction clutches including a single drum having a hub coupled for rotation with the driven shaft between the two driven gears, two sets of driving and driven friction discs situated on opposite sides of the drum for making the first or second driven gear fast for rotation therewith by means of first and second pistons which are slidable axially relative to the drum and define therewith respective pressure chambers connected to a hydraulic power-shift operating system, characterised in that the hub (14) of the drum (13) of the two friction clutches (11, 12) is provided with a resilient device (25) for compensating for the axial thrusts applied to the two pistons (21, 22) by the pressure produced in the respective thrust chambers (23, 24) by centrifugal action.

2. A unit according to Claim 1, characterised in that the compensator device (25) comprises: a plurality of axial studs (26) mounted for sliding through the hub (14) of the drum (13), the studs (26) having respective substantially mushroom-shaped ends (28) projecting from opposite sides of the hub (14),

a pair of retaining rings (31) coaxial with the output shaft (10) and arranged in frontal peripheral bearing contact with the first and second pistons (21, 22), each retaining ring (31) having a plurality of radial notches (32) which open onto the inner edge of the ring (31) and are extended at one side by a lateral notch (33) in which the corresponding mushroom-shaped end (28) of a respective axial stud (26) is engaged,

two rings of axial thrust springs (36) reacting between two pairs of spaced-apart bearing rings (35, 37) coaxial with the output shaft (10) adjacent the retaining rings (31), the bearing ring (35) adjacent the corresponding retaining ring (31) of each pair reacting against the corresponding mushroom-shaped ends (28) of axial studs (26) and carrying a plurality of axial pins (34) which pass slidably through the radial notches (32) in the corresponding retaining ring (31) and react frontally against the hub (14).

FIG. 1

EP 0 314 636 A2

FIG. 2

FIG. 4

FIG. 3